# EUROPEAN PATENT APPLICATION

(11) **EP 4 589 515 A1**
(43) Date of publication of application: **23.07.2025**
(21) Application number: 25150754.7
(22) Date of filing: 08.01.2025
(51) Int. Cl.: G06Q 20/02, G06Q 20/38

(54) **METHOD, ELECTRONIC DEVICE AND RECORDING MEDIUM OF PROCESSING NON-FUNGIBLE TOKEN**

(30) Priority: 22.01.2024 KR 20240009607
(71) Applicant: Dunamu Inc., Seoul 06621 (KR)
(72) Inventor: JUNG, Minseok, 06621 Seoul (KR)
(74) Representative: Vossius & Partner Patentanwälte Rechtsanwälte mbB

(57) **Abstract**

Provided is a method of processing a non-fungible token (NFT) by an electronic device, the method including executing a smart contract to process an NFT associated with a receipt by a processor of the electronic device connected to a computer network including a blockchain network, and the smart contract includes one or more instructions, and the one or more instructions are configured to, when executed, cause the processor to identify a digital file regarding a receipt related to a purchase of a product and an issuance request for an NFT associated with the receipt, issue the NFT associated with the receipt, identify evaluation information about the product, and if a writer of the evaluation information about the product is a purchaser that performs the purchase of the product, record the evaluation information about the product in metadata of the NFT associated with the receipt.

## Description

### [Technical Field]

Example embodiments relate to technology for processing a non-fungible token, and more particularly, to a method, an electronic device, and a recording medium of processing a non-fungible token regarding a receipt.

### [Background Art]

Recently, in various industry fields, digital assets based on the blockchain technology have been used. The digital assets such non-fungible tokens may be traded on a blockchain network and used for value exchanges between token holders. The non-fungible token (NFT) is integrated with various services and used to create a new business model.

Meanwhile, the development of Internet services such as social network services (SNS) has led to a growing tendency for a prospective purchaser of a specific product or service to identify purchase reviews from previous purchasers of the product or service before purchasing.

### [Disclosure]

### [Technical Solution]

An aspect of the present disclosure provides guaranteeing a purchase of a product or service using a non-fungible token (NFT) associated with a receipt related to the purchase of the product or service.

Another aspect of the present disclosure provides recording evaluation information (for example, a review) in metadata of an NFT associated with a receipt related to a purchase of a product or service by an actual purchaser of the product or service.

Example embodiments are not limited to the technical features described above, and other technical features may be inferred from the example embodiments below.

### [Description of Drawings]

These and/or other aspects, features, and advantages of the disclosure will become apparent and more readily appreciated from the following description of example embodiments, taken in conjunction with the accompanying drawings of which:
FIG. 1 is a diagram illustrating a system for processing a non-fungible token (NFT) according to an example embodiment of the present disclosure;
FIG. 2 is a block diagram illustrating an electronic device that may implement any one of devices according to an example embodiment of the present disclosure;
FIG. 3 is a conceptual diagram of a blockchain network according to an example embodiment of the present disclosure;
FIG. 4 is a flowchart showing a process of processing an NFT associated with a receipt related to a purchase of a product by an electronic device according to an example embodiment of the present disclosure;
FIG. 5 is a flowchart showing a process of recording evaluation information about a product in metadata of an NFT associated with a receipt by an electronic device according to an example embodiment of the present disclosure;
FIG. 6 is a flowchart showing a process of changing a holder of an NFT associated with a receipt by an electronic device according to an example embodiment of the present disclosure;
FIG. 7 is a flowchart showing a process of associating an NFT associated with a receipt and an NFT associated with an additional receipt with each other by an electronic device according to an example embodiment of the present disclosure; and
FIG. 8 is a flowchart showing a process of processing an NFT associated with a receipt related to a purchase of a service by an electronic device according to an example embodiment of the present disclosure.

### [Best Mode]

According to an aspect, there is provided a method of processing a non-fungible token (NFT) by an electronic device, the method including executing a smart contract to process an NFT associated with a receipt by a processor of the electronic device connected to a computer network including a blockchain network. According to an example embodiment, the smart contract may include one or more instructions, and the one or more instructions may be configured to, when executed, cause the processor to identify a digital file regarding a receipt related to a purchase of a product and an issuance request for an NFT associated with the receipt, issue, in response to the identified issuance request, the NFT associated with the receipt, identify evaluation information about the product, and if a writer of the evaluation information about the product is a purchaser that performs the purchase of the product, record the evaluation information about the product in metadata of the NFT associated with the receipt.

According to an example embodiment, the one or more instructions may be further configured to, when executed, cause the processor to store, in response to the identified issuance request, the digital file regarding the receipt in a distributed file system and issue the NFT associated with the receipt by recording an address where the digital file regarding the receipt is stored in the distributed file system in one or more blocks on the blockchain network.

According to an example embodiment, the one or more instructions may be further configured to, when executed, cause the processor to record a wallet address of a first account corresponding to the purchaser of the product in the metadata of the NFT associated with the receipt.

According to an example embodiment, the one or more instructions may be further configured to, when executed, cause the processor to identify whether the writer of the evaluation information about the product is a holder of the NFT associated with the receipt, and if the writer is the holder of the NFT associated with the receipt, determine that the writer is the purchaser of the product.

According to an example embodiment, the one or more instructions may be further configured to, when executed, cause the processor to identify a wallet address of an account of the writer, and based on the wallet address of the account of the writer and the wallet address of the first account corresponding to the holder of the NFT recorded in one or more blocks on the blockchain network, identify whether the writer is the holder of the NFT associated with the receipt.

According to an example embodiment, the one or more instructions may be further configured to, when executed, cause the processor to, in response to the writer being the purchaser of the product, store the evaluation information about the product in a distributed file system and record an address where the evaluation information about the product is stored in the distributed file system in the metadata of the NFT associated with the receipt.

According to an example embodiment, the one or more instructions may be further configured to, when executed, cause the processor, if the writer is not the purchaser of the product, not to record the evaluation information about the product in the metadata of the NFT associated with the receipt.

According to an example embodiment, the one or more instructions may be further configured to, when executed, cause the processor to obtain identification information about the writer, and based on the identification information about the writer, verify whether the writer is the purchaser of the product.

According to an example embodiment, the one or more instructions may be further configured to, when executed, cause the processor to identify a change request for changing a holder of the NFT associated with the receipt from the first account to a second account, verify whether the second account is an account of a repurchaser that repurchases the product from the purchaser, and in response to the second account being the account of the repurchaser, record a wallet address of the second account in the metadata of the NFT associated with the receipt.

According to an example embodiment, the one or more instructions may be further configured to, when executed, cause the processor to identify a digital file regarding an additional receipt related to a repurchase of the product and an issuance request for an NFT associated with the additional receipt, in response to the issuance request for the NFT associated with the additional receipt, issue the NFT associated with the additional receipt, and associate the NFT associated with the receipt and the NFT associated with the additional receipt with each other.

According to an example embodiment, the one or more instructions may be further configured to, when executed, cause the processor to record information about the NFT associated with the receipt in metadata of the NFT associated with the additional receipt.

According to an example embodiment, the one or more instructions may be further configured to, when executed, cause the processor to combine the NFT associated with the receipt and the NFT associated with the additional receipt.

According to an example embodiment, the metadata of the NFT associated with the receipt may include at least one of detailed information about the product, the evaluation information, information on the writer of the evaluation information, or information on a date and time of writing.

According to an example embodiment, the evaluation information may include at least one of a name of the product, identification information, an image, a video, or a review regarding the product.

According to another aspect, there is provided a method of processing an NFT by an electronic device, the method including executing a smart contract to process an NFT associated with a receipt by a processor connected to a computer network including a blockchain network. According to an example embodiment, the smart contract may include one or more instructions, and the one or more instructions may be configured to identify a digital file regarding a receipt related to a purchase of a service and an issuance request for an NFT associated with the receipt, issue, in response to the identified issuance request, the NFT associated with the receipt, identify evaluation information about the service, by verifying whether a writer of the evaluation information about the service is a holder of the NFT associated with the receipt, verify whether the writer of the evaluation information about the service is a purchaser of the service, if the writer is the purchaser of the service, record the evaluation information about the service in metadata of the NFT associated with the receipt, and in response to recording the evaluation information about the service, provide a reward to a first account corresponding to the purchaser.

According to an example embodiment, the metadata of the NFT associated with the receipt may include at least one of detailed information about the service, the evaluation information, information on the writer of the evaluation information, or information on a date and time of writing, and the evaluation information may include at least one of a name of a store providing the service, a charge, an image, a video, or a review regarding the service.

According to another aspect, there is provided an electronic device including a communication circuit configured to perform communication with a computer network including a blockchain network, a memory in which a smart contract to process an NFT associated with a receipt is stored, and a processor. According to an example embodiment, the processor may be configured to execute the smart contract including one or more instructions, and the processor may be configured, by executing the one or more instructions, to identify a digital file regarding a receipt related to a purchase of a product and an issuance request for an NFT associated with the receipt, issue, in response to the identified issuance request, the NFT associated with the receipt, identify evaluation information about the product, and if a writer of the evaluation information about the product is a purchaser that performs the purchase of the product, record the evaluation information about the product in metadata of the NFT associated with the receipt.

Additional aspects of example embodiments will be set forth in part in the description which follows and, in part, will be apparent from the description.

According to example embodiments, it is possible to technically guarantee a purchase of a product or service using an NFT associated with a receipt related to the purchase of the product or service. More specifically, it is possible to technically guarantee whether a product or service is purchased by a specific user.

According to example embodiments, it is possible to record evaluation information (for example, a review) in metadata of an NFT associated with a receipt related to a purchase of a product or service by an actual purchaser of the product or service. Through this, it may be technically guaranteed that the evaluation information about the product or service is written by the actual purchaser, and a prospective purchaser of the product or service may trust the evaluation information of the actual purchaser before purchasing.

According to example embodiments, it is possible to technically guarantee the authenticity of a product in a secondary trade process of the product through evaluation information from a previous owner or purchase history and to preserve or enhance a product value.

The technical benefits achieved by example embodiments are not limited to those described above, and other technical benefits may be clearly understood by those skilled in the art from the appended claims.

### [Mode for Invention]

Terms used in example embodiments are selected from currently widely used general terms when possible while considering the functions in the present disclosure. However, the terms may vary depending on the intention of a person skilled in the art, precedents, the emergence of new technology, and the like. Further, in certain cases, there are also terms arbitrarily selected by the applicant, and in these cases, the meaning will be described in detail in the corresponding descriptions. Therefore, the terms used in the present disclosure are not to be construed simply as its designation but based on the meaning of the term and the overall context of the present disclosure.

Throughout the specification, when a part is described as "comprising or including" an element, it does not exclude another element but may further include another element unless otherwise stated. Furthermore, terms such as "... unit," "... part," and "... module" described in the specification mean a unit that processes at least one function or operation, which may be implemented as hardware, software, or a combination thereof, or unlike the illustrated examples, the terms may not be clearly distinguished in specific operations.

The expression "at least one of a, b, or c" described throughout the specification may include "a alone," "b alone," "c alone," "a and b," "a and c," "b and c," or "all of a, b, and c."

In the present disclosure, a "terminal" or "user terminal" may be implemented as, for example, a computer or a portable terminal capable of accessing a server or another terminal through a network. Here, the computer may include, for example, a notebook, a desktop computer, and/or a laptop computer which are equipped with a web browser. The portable terminal may be a wireless communication apparatus ensuring portability and mobility and include (but is not limited to) any type of handheld wireless communication apparatus, for example, a tablet PC, a smartphone, a communication-based terminal such as international mobile telecommunication (IMT), code division multiple access (CDMA), w-code division multiple access (W-CDMA), long term evolution (LTE), or the like.

In the following description, terms such as "transferring," "communicating," "transmitting," and "receiving" signals, messages, or information and having other similar meanings include not only conveying signals, messages, or information directly from one element to another but also through other elements. In particular, "transferring" or "transmitting" a signal, a message, or information to an element indicates the final destination of the signal, message, or information, which does not refer to a direct destination. The same is true for "receiving" a signal, a message, or information. Further, in this specification, two or more pieces of data or information being "related" indicates that when one data (or information) is obtained, at least a portion of other data (or information) may be obtained based thereon.

In addition, while such terms as first, second, etc., may be used to describe various elements, such elements should not be limited to the above terms. The above terms may be used to distinguish one element from another.

For example, without departing from the scope of the present disclosure, a first element may be referred to as a second element, and similarly, a second element may be referred to as a first element.

Hereinafter, example embodiments of the present disclosure will be described in detail with reference to the accompanying drawings so that those of ordinary skill in the art to which the present disclosure pertains may easily implement example embodiments of the present disclosure. However, the present disclosure may be implemented in multiple different forms and is not limited to the example embodiments described herein.

In describing the example embodiments, descriptions of technical contents that are well known in the technical field to which the example embodiments of the present disclosure pertain and that are not directly related to the present disclosure will be omitted. This is to more clearly communicate without obscuring the gist of the present disclosure by omitting unnecessary description.

For the same reason, some elements are exaggerated, omitted, or schematically illustrated in the accompanying drawings. In addition, the size of each element does not fully reflect the actual size. In each drawing, the same or corresponding elements are assigned the same reference numerals.

Advantages and features of example embodiments of the present disclosure, and a method of achieving the advantages and the features will become apparent with reference to the example embodiments described below in detail together with the accompanying drawings. However, the present disclosure is not limited to the example embodiments disclosed below and may be implemented in various different forms. The example embodiments are provided only so as to render the present disclosure complete and completely inform those of ordinary skill in the art to which the example embodiments of the present disclosure pertain about the scope of the present disclosure. The present disclosure is only defined by the scope of the claims. Like reference numerals refer to like elements throughout the specification.

It will be understood that each block of a flowchart diagram and a combination of the flowchart diagrams may be performed by computer program instructions. The computer program instructions may be embodied in a processor of a general-purpose computer or a special-purpose computer or may be embodied in a processor of other programmable data processing equipment. Thus, the instructions, executed via a processor of a computer or other programmable data processing equipment, may generate a part for performing functions described in the flowchart blocks. To implement a function in a particular manner, the computer program instructions may also be stored in a computer-usable or computer-readable memory that may direct a computer or other programmable data processing equipment. Thus, the instructions stored in the computer-usable or computer-readable memory may be produced as an article of manufacture containing an instruction part for performing the functions described in the flowchart blocks. The computer program instructions may be embodied in a computer or other programmable data processing equipment. Thus, a series of operations may be performed in a computer or other programmable data processing equipment to create a computer-executed process, and the computer or other programmable data processing equipment may provide steps for performing the functions described in the flowchart blocks.

Additionally, each block may represent a module, a segment, or a portion of code that includes one or more executable instructions for executing a specified logical function(s). It should also be noted that, in some alternative implementations, the functions recited in the blocks may occur out of order. For example, two blocks shown one after another may be performed substantially at the same time, or the blocks may sometimes be performed in the reverse order according to a corresponding function.

In the present disclosure, a token issued, used, or deleted based on a blockchain network may comply with at least a portion of the standards set based on Ethereum request for comments (ERC). For example, a fungible token (FT) may comply with ERC20. ERC20 includes a set of rules required for tokens to have the characteristics of FT, and the rules included in ERC20 may include rules regarding functions such as transferring a token between addresses, checking a total token supply, and checking a token balance for a specific address. For example, a non-fungible token (NFT) may comply with ERC721. ERC721 includes a set of rules required for tokens to have the characteristics of NFT, and the rules included in ERC721 may include rules regarding functions such as checking the number of tokens held by a specific address, checking a holder of a specific token, transferring a token between addresses, and returning an address approved to transfer a specific token. For another example, tokens may comply with ERC 1155, a standard covering both FT and NFT. ERC 1155 is a combined token standard that allows both FT and NFT to be created in one smart contract, reducing gas costs and increasing scalability compared to ERC721 by storing multiple token types in one smart contract.

A smart contract, the term used in the present disclosure, may refer to a program or an application operating on a virtual machine executed by two or more nodes included in a blockchain network. The smart contract may be a computer protocol for establishing, verifying, and executing a specific contract by itself. The smart contract may refer to a program in which a contract is executed automatically if contract conditions programmed based on the blockchain technology are satisfied. The virtual machine may include, for example, an Ethereum virtual machine (EVM), which is a distributed computing environment that operates on an Ethereum blockchain and executes and manages smart contracts. The EVM is a turing machine for processing (for example, deploying and executing) smart contracts and may process all types of algorithms. The EVM may execute a smart contract based on rules defined by Ethereum and perform an operation of updating a state changed according thereto. The smart contract may be written to comply with a predetermined set of rules or protocol. For example, with reference to ERC-721 or ERC-1155, the smart contract may be written to include one or more functions corresponding to each protocol. However, by including other functions not included in the example protocols, various types of smart contracts may be written.

A wallet, the term used in the present disclosure, may refer to a tool in an electronic form for safely storing and managing a digital asset of a user. The wallet may store and manage information related to a cryptocurrency or a digital asset. The digital asset wallet may be sorted into a hot wallet and a cold wallet. The hot wallet is a wallet connected to Internet in a form accessible to cryptocurrencies in an online environment. Generally, the hot wallet may be provided as a software wallet or an online service. The hot wallet may provide convenient and fast access to transfer cryptocurrencies and may process trading rapidly. The cold wallet may be a wallet storing a private key in an offline environment not connected to Internet. Generally, the cold wallet may be provided as a hardware wallet or a paper wallet. The cold wallet may provide a high level of security against hacking or malicious software attacks since the private key is safely protected and stored offline. A wallet address may be a type of identifier for identifying a wallet. The user may transmit and receive the digital asset using the wallet address.

In the present disclosure, transmitting a transaction to a blockchain network may include uploading specific data on the blockchain network, modifying or deleting data previously uploaded on the blockchain network, or executing a smart contract deployed on the blockchain network. A transaction used in the present disclosure may refer to a logical unit of operations performed on a blockchain network. The transaction may include a transaction recorded on the blockchain network and/or a transaction not recorded on the blockchain network. For example, a transaction of an Ethereum blockchain network may include a transaction recorded on the blockchain network including a transaction hash value and a message (internal transaction) generated when executing the transaction in the EVM.

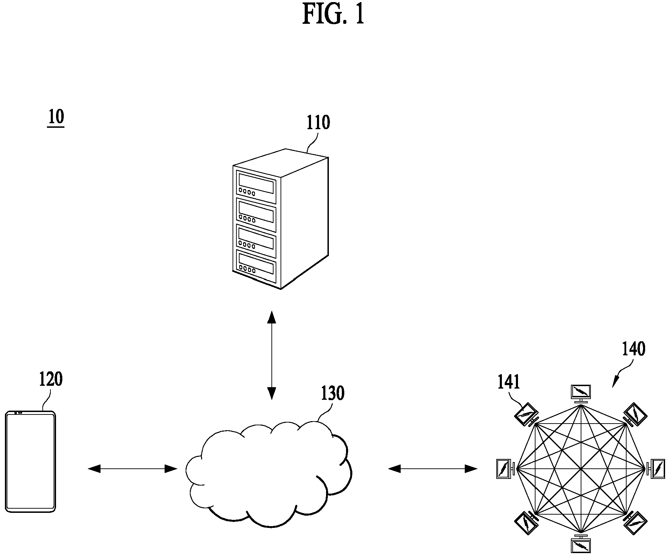

FIG. 1 is a diagram illustrating a system 10 for processing a non-fungible token (NFT) according to an example embodiment of the present disclosure. The system 10 may include a server 110, a terminal 120, a blockchain network 140 and/or a computer network 130. The blockchain network 140 may include two or more nodes (for example, a node 141). The server 110, the terminal 120, and each node of the blockchain network 140 may communicate with each other through the computer network 130. The computer network 130 may be a digital telecommunication network and may refer to a connection between each distributed device through a predetermined communication network. The computer network 130 may be implemented as any types of wired or wireless networks such as local area networks (LAN), wide area networks (WAN), mobile radio communication networks, and wireless broadband Internet (Wibro). The computer network 130 may be a data communication network to enable each device illustrated in FIG. 1 to communicate smoothly with each other in a comprehensive sense and may include a wired Internet network, a wireless Internet network, and a mobile wireless network. This figure illustrates an environment that the server 110 communicates with the terminal 120 and two or more nodes through the computer network 130, but this is merely an example, and the number of the terminal 120 and the number of nodes may change.

According to an example embodiment, the server 110 may be the server 110 that implements (operates) a platform (hereinafter, the NFT management platform) managing a non-fungible token associated with a receipt. The NFT management platform may be understood as a platform for a variety of NFT-related management or processing such as issuance, circulation, promotion, trade support, or burning of NFTs. The server 110 may perform a variety of management or processing for an NFT associated with a receipt. For example, the server 110 may manage each digital asset wallet address in which NFTs of users are stored. In the present disclosure, an account may be a unique string to prove the identity of a user or identify the user in the NFT management platform. The users may access the NFT management platform with accounts thereof and trade NFTs. If the accounts are assigned in the NFT management platform, the users may be issued with one or more wallets per account for NFT trading. For example, an NFT included in a wallet corresponding to one account may be transferred to a wallet corresponding to another account through the NFT management platform. In this specification, transferring an NFT from a wallet corresponding to one account to a wallet corresponding to another account may be understood as identical or similar to changing information on an NFT owner recorded within metadata of the NFT, for example, information on a wallet address of the owner, from first information to second information. The server 110 may perform various operations (for example, communication between users) generally required in the NFT management platform. The server 110 may be involved in issuing and trading NFTs by interacting with at least one of the nodes included in the blockchain network 140. The server 110 may be, but is not limited to, one electronic device and may also refer to a group of a plurality of electronic devices electronically or physically connected.

The server 110 according to an example embodiment may be implemented as one or more electronic devices (or computing devices). For example, all functions of the server 110 may be implemented in a single electronic device. For another example, a first function of the server 110 may be implemented in a first electronic device and a second function may also be implemented in a second electronic device. The electronic device may be a desktop computer, a laptop computer, an application server, a proxy server, and a cloud server but is not limited thereto and may be various types of devices equipped with computing functions.

The terminal 120 according to an example embodiment may be the terminal 120 of a user that uses the NFT management platform or the terminal 120 of a manager that manages the NFT management platform. The user may use various functions provided by the NFT management platform through the terminal 120. The user may request issuing an NFT associated with a receipt or perform communication with other users through the terminal 120. The user may use the NFT management platform through a dedicated application or a web browser installed in the terminal 120. The terminal 120 may be, for example, any one of devices such as a desktop computer, a workstation, a laptop computer, a tablet computer, an audio player, a wearable device, or a smart phone but is not limited to these examples and may be various types of electronic devices equipped with computing functions. In this figure, the number of the terminal 120 is illustrated as 1 but is not limited thereto, and the number of the terminal 120 may also be 2 or more.

According to an example embodiment, one node (for example, the node 141) included in the blockchain network 140 may refer to an electronic device of a participant that participates in the blockchain network 140. The node may be a component of the blockchain network 140. The node may perform operations for maintaining a blockchain of the blockchain network 140. For example, any one node of the blockchain network 140 may generate a new block of a corresponding blockchain. The new block may be shared among other nodes of the blockchain network 140 and connected to a following block of the blockchain through a distributed consensus process. In other words, the node may perform an operation of generating, verifying, or propagating a transaction and a block in which the transaction is recorded. The node may be a full node, a light node, a master node, a mining node, a random node, a baking node, or a super node based on an operation performed by the node. The node may perform token issuance by interacting with the server 110. The token issuance may refer to a process in which an issuer creates a specific amount of tokens using a smart contract and stores the created tokens in a specific wallet.

According to an example embodiment, the node may be implemented as an electronic device (or computing device). For example, the above-described electronic device may be a desktop computer, a laptop computer, or the like but is not limited thereto and may be various types of devices equipped with computing functions. The server 110, the terminal 120, and the node may represent elements distinguished functionally. Two or more elements may be implemented in an integrated form in an actual physical environment. For example, the server 110 and the node included in the blockchain network 140 may be implemented in the form of different logics within the identical electronic device 200. For example, the server 110 may be implemented to operate as one node of the blockchain network 140, and the terminal 120 may also be implemented to operate as one node of the blockchain network 140.

According to an example embodiment, the blockchain network 140 may record in a block, approve, or process a transaction, and a smart contract may be generated. In the present disclosure, the blockchain network 140 is illustrated as one but is not limited thereto and may also consist of a main blockchain network and a side blockchain network. In the above case, the main blockchain network may focus on security and decentralization and the side blockchain network may focus on speed and a reduction in trade costs (for example, gas fees).

According to an example embodiment, each node of the blockchain network may record a transaction based on operations such as issuance, drop, and update of NFTs in the blockchain network 140. Each node may also read the transaction recorded and verified in the blockchain network 140 and maintain the recency of information corresponding thereto.

According to an example embodiment, a smart contract for performing operations such as issuing NFTs and recording information in NFT metadata may be deployed on the blockchain network 140. The smart contract may be a smart contract to process an NFT associated with a receipt, and the smart contract may include one or more instructions. A processor of an electronic device connected to the computer network 130 including the blockchain network 140 may execute the smart contract to process the NFT associated with the receipt. The one or more instructions may be configured to, when executed, cause the processor of the electronic device to perform various determined operations.

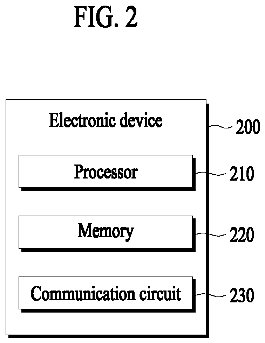

FIG. 2 is a block diagram illustrating the electronic device 200 that may implement any one of devices according to an example embodiment of the present disclosure. According to the present disclosure, the electronic device 200 may represent a computing device, and the electronic device 200 may be referred to interchangeably as the computing device. The server 110, the terminal 120, and each node included in the blockchain network 140 described above may be implemented by the electronic device 200.

The electronic device 200 according to an example embodiment may include a processor 210, a memory 220, and a communication circuit 230. At least one of the elements included in the electronic device 200 may be omitted or other elements may be added to the electronic device 200. Additionally or substitutionally, some elements may be implemented as integrated or may also be implemented as a single entity or a plurality of entities. At least some elements within the electronic device 200 may be implemented as integrated or may also be implemented as a single entity or a plurality of entities. At least some elements within the electronic device 200 may be connected to each other through a bus, a general purpose input/output (GPIO), a serial peripheral interface (SPI), or a mobile industry processor interface (MIPI) and may transmit and receive data and/or signals.

The processor 210 of the electronic device 200 according to an example embodiment may be a configuration that may perform operations or data processing regarding the control and/or communication of each element of the electronic device 200 and may be operatively connected to the elements of the electronic device 200. The processor 210 may load instructions or data received from other elements of the electronic device 200 in the memory 220, process instructions or data stored in the memory 220, and store result data. Unless otherwise specified, the processor 210 in the present disclosure may refer to a set of one or more processors 210.

The memory 220 of the electronic device 200 according to an example embodiment may store various data used by at least one element (for example, the processor 210). The memory 220 may store instructions for operations of the processor 210. A program may be stored as software in the memory 220 and may include, for example, an operating system, middleware, or an application. Unless otherwise specified, the memory 220 in the present disclosure may refer to a set of one or more memories 220.

The communication circuit 230 of the electronic device 200 according to an example embodiment may establish a wired or wireless communication channel with an external device (for example, the terminal 120) and may transmit and receive various data to and from the external device. The communication circuit 230 of the electronic device 200 may include at least one port to be connected to the external device via a wired cable for wired communication with the external device. The communication circuit 230 of the electronic device 200 may be configured to include a cellular communication module and to be connected to a cellular network (for example, 3G, LTE, 5G, Wibro, or worldwide interoperability for microwave access (Wimax)). According to an example embodiment, the communication circuit 230 of the electronic device 200 may include a short-range communication module and may transmit and receive data to and from the external device using short-range communication (for example, Wi-Fi, Bluetooth, Bluetooth low energy (BLE), and ultra-wideband (UWB)) but is not limited thereto.

According to an example embodiment, the electronic device 200 may further include a display, an input device, or an output device. The display may display various screens under the control of the processor 210. The input device may receive data from the outside (for example, a user) of the electronic device 200. The input device may include, for example, a mouse and a keyboard. The output device may output information in various manners under the control of the processor 210. The output device may include, for example, a speaker.

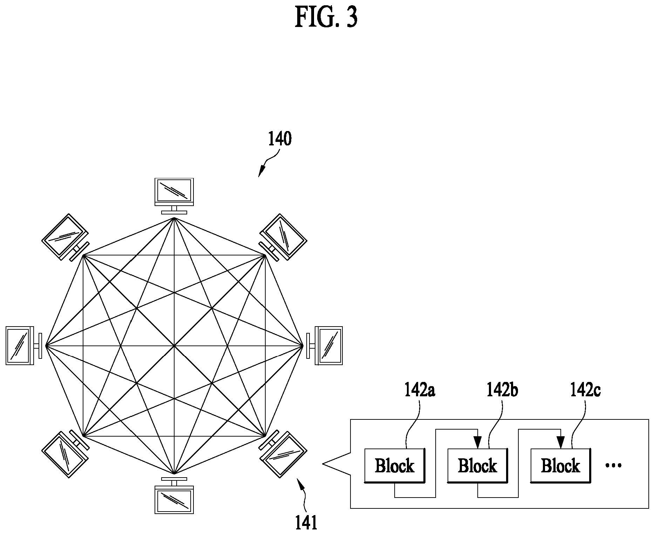

FIG. 3 is a conceptual diagram of the blockchain network 140 according to an example embodiment of the present disclosure. In the present disclosure, a block may refer to a specific data type. In the present disclosure, a blockchain may refer to a data structure in which one or more blocks 142a, 142b, and 142c are connected in a chain form. The one or more blocks 142a, 142b, and 142c included in the blockchain may be stored in one or more nodes included in the blockchain network 140 each independently or may be distributed and stored across multiple nodes. Each of the one or more blocks 142a, 142b, and 142c may include a block hash, a block header, or a block body. The block hash may be unique information that may identify a block and, for example, may be a string represented in 256 bits. The block header may include, for example, at least one of software or protocol version information, a hash of a previous block based on a connection order of blocks on the blockchain, a merkle root, time information indicating a block creation time, bits representing calculation difficulty, or a nonce which is an arbitrary value for generating a block hash value required in a process of adding a new block to the blockchain. The block body may include at least one transaction. The transaction may be a set of data having a specific data structure and a unit of information stored in the block body. The transaction may include information about creating or trading tokens. The transaction may be, for example, information indicating that a first node included in the blockchain network 140 transfers an NFT to a second node.

The blockchain may be managed by the blockchain network 140 including at least one node. Each of at least one node included in the blockchain network 140 may be referred to as a participant of the blockchain network. At least one node included in the blockchain network 140 may be operated by a hierarchical structure. The hierarchical structure may include, for example, at least one of a data layer for defining a structure of data treated by the blockchain network 140 and managing data, a consensus layer for performing mining to verify the validity of blocks and create a block and processing fees paid for miners in the mining process, a common layer for implementing or managing a peer-to-peer (P2P) network protocol, a hash function, an electronic signature, encoding, and a common storage, or an application layer in which various applications are generated or processed.

At least one node included in the blockchain network 140 may share or store a transaction recorded on the blockchain. In addition, at least one node included in the blockchain network 140 may perform a verification operation for a transaction transferred to the blockchain network 140 through a consensus algorithm of the blockchain, and if verification is completed, perform a function of recording the verified transaction in a block of the blockchain. The type of the consensus algorithm performed by the blockchain network 140 is not limited, and any types of consensus algorithms that may be adopted and modified by a person of ordinary skill in the art may be performed. For example, the consensus algorithm may include at least one of a proof of work (PoW) algorithm, a proof of stake (PoS) algorithm, a delegated proof of stage (DPoS) algorithm, a practical byzantine fault tolerance (PBFT) algorithm, a delegated byzantine fault tolerance (DBFT) algorithm, a redundant byzantine fault tolerance (RBFT) algorithm, a Sieve algorithm, a Tendermint algorithm, a Paxos algorithm, a Raft algorithm, a proof of authority (PoA) algorithm, or a proof of elapsed time (PoET) algorithm or an algorithm of applying the consensus algorithms described above.

Each of at least one node included in the blockchain network 140 may store a smart contract. Through this, at least one node included in the blockchain network 140 may share an identical smart contract. In addition, the smart contract may be recorded in a block of the blockchain managed by the blockchain network 140. The smart contract may be, for example, a specification or a script written in a programming language such as solidity and may be a program or an application operating on a virtual machine executed by at least one node included in the blockchain network 140. The smart contract may include one or more instructions that cause a specific operation to be executed if a specific condition is satisfied. The specific condition may include, for example, a condition that a specific type of token is inputted or a specific format of data is inputted. The specific operation may include, for example, an operation of transferring the specific type of token to an arbitrary node of the blockchain network 140.

The smart contract may be written to comply with a predetermined set of rules (or protocol). For example, the smart contract may be written to include one or more functions corresponding to each protocol of ERC-20 or ERC-721. However, as other functions (for example, one or more functions corresponding to ERC-1155) not included in the example protocols are included in the smart contract, various types of smart contracts may be written.

In the present disclosure, a token may be a token that may be used on the blockchain managed by the blockchain network 140 and may be an NFT. The NFT may refer to a virtual token created based on a smart contract written with reference to a predetermined protocol (for example, ERC-721 or ERC-1155). The NFT may be recorded in a blockchain which is a distributed storage and thus may maintain integrity. The NFT may be created as including a specific type of data and thus may guarantee the presence of the specific type of data. In the present disclosure, an object referred to as a token may be the NFT unless otherwise stated by context.

In the present disclosure, information on an NFT may be a set of data including a plurality of data. The information on the NFT may include at least one of NFT identification information (NFT ID), information indicating a specific object, event identification information (event ID), an issuance number regarding an event, information (a digital file uniform resource identifier (URI)) for accessing a digital file connected to content corresponding to the NFT, information (a metadata URI) for accessing metadata of the NFT, or information (for example, a wallet address of a holder that currently holds the NFT, an ownership period of the NFT, trade history on the NFT, and a trade price) about a current token owner. Hereinafter, in the present disclosure, it is supposed and described for convenience of description that token-related information recorded in the blockchain network 140 includes a digital file URI, a metadata URI, metadata of content indicated by a digital file, or token metadata itself, but the present disclosure is not limited thereto.

The NFT identification information included in the information on the NFT may be a unique value assigned to each NFT and may be a value for distinguishing a plurality of NFTs from each other. The NFT identification information may be, for example, a string such as 0x789456.

In the present disclosure, the NFT may be associated with a specific object (for example, a receipt). The expression that the NFT is associated with the specific object may be an expression indicating a relationship between the NFT and the specific object if a digital file connected to the NFT is a digital file of the specific object. The specific object may include, for example, a receipt related to a purchase of a product and a receipt related to a purchase of a service. A digital file regarding the receipt may be, for example, a photo or a video of the receipt related to the purchase of the product and a photo or a video of the receipt related to the purchase of the service. Alternatively, the digital file regarding the receipt may be, for example, a receipt in electronic form which is issued according to the purchase of the product or service.

The digital file URI included in the information on the NFT may be an address where a digital file is stored in a distributed file system or a hash value of the stored digital file. The distributed file system may be an interplanetary file system (IPFS) that distributes and stores files in multiple devices. A digital file accessible through the digital file URI may be, for example, an image file, a video file, or a sound file. In the present disclosure, the digital file connected to the NFT may be an expression that refers to a digital file obtained through a digital file URI recorded in the NFT and may have an identical meaning with expressions such as a digital file owned by the NFT or a digital file associated with the NFT unless otherwise used by context.

The metadata URI included in the information on the NFT may be a hash value of NFT metadata stored in the distributed file system. The NFT metadata may refer to a data set including a variety of information about the NFT. The metadata may include, for example, at least one of an NFT name, NFT ID, a name of a receipt associated with the NFT, an NFT creation time point, current NFT holder information, NFT holder change history, information related to an event corresponding to the NFT, or the digital file URI.

At least a portion of a variety of information included in the information on the NFT may be stored in the memory 220 of the electronic device 200. In addition, at least a portion of the variety of information included in the information on the NFT may be recorded in a block managed by the blockchain network 140.

In the present disclosure, the NFT may be processed by a smart contract. In the present disclosure, the expression that the NFT is processed by the smart contract may inclusively refer to various operations such as the NFT being issued (created) by the smart contract, the NFT being transferred from an address of one user to an address of another user, or the NFT being burned. The smart contract may include various types of functions.

The smart contract may be written to comply with a predetermined set of rules (or protocol). For example, a smart contract written to comply with an arbitrary first protocol (for example, ERC-20) may include a function that returns a total supply of virtual currency tokens. The smart contract written to comply with the first protocol may include a function that obtains a blockchain address of a specific node and returns a quantity of a virtual currency token held by the corresponding address. The smart contract written to comply with the first protocol may include a function that obtains a quantity of an arbitrary virtual currency token and a blockchain address of a node receiving the virtual currency token and transfers the virtual currency token to the address of the receiving node. The smart contract written to comply with the first protocol may include a function that obtains a quantity of an arbitrary virtual currency token, a blockchain address of a node transferring the virtual currency token, and a blockchain address of a node receiving the virtual currency token and transfers the virtual currency token from the address of the transferring node to the address of the receiving node. The smart contract written to comply with the first protocol may include a function that returns whether a withdrawal is allowed to limit a withdrawable quantity of a virtual currency token. In addition, the smart contract written to comply with the first protocol may include a function that returns a remaining withdrawable quantity.

A smart contract written to comply with an arbitrary second protocol (for example, ERC-721) may include a function (in other words, an NFT creation function) that creates an NFT based on one or more pieces of information received from a specific node. For example, the NFT creation function may obtain a specific digital file URI received from the specific node and a blockchain address of an arbitrary node and create a token corresponding to the corresponding digital file URI. If the NFT is created (issued) by the NFT creation function, information on a holder of the corresponding NFT may be determined based on the blockchain address of the arbitrary node inputted to the NFT creation function. The NFT creation function may additionally obtain one or more pieces of information (for example, NFT name and attributes regarding the NFT) to be included in NFT metadata and create the NFT. In the present disclosure, the expression such as issuing an NFT or creating an NFT may be used interchangeably with the expression such as minting an NFT. In addition, the smart contract written to comply with the second protocol may include a function that obtains a blockchain address of an arbitrary node and returns a quantity of a token held by the corresponding address. The smart contract written to comply with the second protocol may include a function that obtains NFT ID of an arbitrary NFT and returns information on a holder of the corresponding NFT. The smart contract written to comply with the second protocol may include a function that obtains a blockchain address of an arbitrary node and NFT ID of an arbitrary NFT and allows transmission permission of the NFT having the corresponding NFT ID for the corresponding node. The smart contract written to comply with the second protocol may include a function that obtains NFT ID of an arbitrary NFT and returns a blockchain address of one or more nodes having transmission permission of the corresponding NFT.

The above descriptions of the smart contracts written to comply with the first protocol and the second protocol are merely to describe examples of functions included in the smart contract, and the present disclosure is not limited thereto, and the smart contract according to the present disclosure may include various types of smart contracts including at least one function related to an NFT.

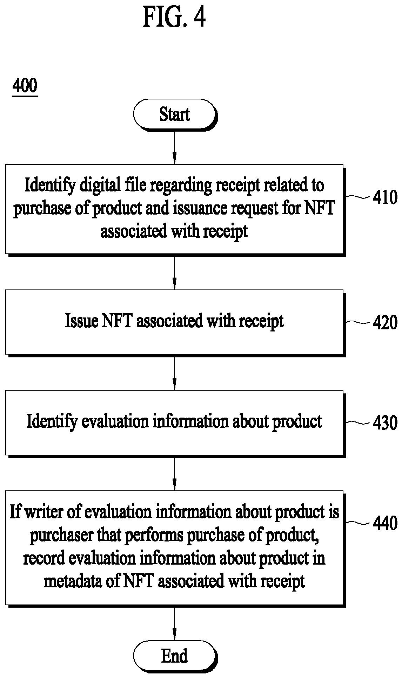

FIG. 4 is a flowchart showing a process of processing an NFT associated with a receipt related to a purchase of a product by the electronic device 200 according to an example embodiment of the present disclosure. The processor 210 of the electronic device 200 connected to the computer network 130 including the blockchain network 140 may execute a smart contract to process an NFT associated with a receipt. The server 110, the terminal 120, and each node included in the blockchain network 140 described above may be implemented by the electronic device 200. The processor 210 of the electronic device 200 may transfer a transaction to the blockchain network 140 to process the NFT associated with the receipt. In this case, the smart contract deployed on the blockchain network 140 may be executed through a virtual machine (for example, EVM). The smart contract may include one or more instructions. In other words, the processor 210 of the electronic device 200 may perform the one or more instructions included in the smart contract by executing the smart contract to process the NFT associated with the receipt through the virtual machine. The one or more instructions may be configured to, when executed, cause the processor 210 of the electronic device 200 to perform a specific operation corresponding to the one or more instructions. The flowchart illustrated in FIG. 4 is a diagram illustrating operations corresponding to the one or more instructions included in the smart contract, which are performed as the processor 210 of the electronic device 200 executes the smart contract through the virtual machine. In other words, with regard to FIG. 4, a series of operations performed by the processor 210 of the electronic device 200 may be performed through the virtual machine.

Referring to flowchart 400, the processor 210 of the electronic device 200 according to an example embodiment may identify a digital file regarding a receipt related to a purchase of a product and an issuance request for an NFT associated with the receipt in operation 410. In other words, the smart contract may include an instruction for identifying the digital file regarding the receipt related to the purchase of the product and the issuance request for the NFT associated with the receipt. The processor 210 of the electronic device 200 may transmit the digital file regarding the receipt related to the purchase of the product to the blockchain network 140 and transmit the issuance request for the NFT associated with the receipt together. The digital file regarding the receipt related to the purchase of the product may be, for example, a receipt photo obtained by shooting a receipt issued if purchasing a product and may also be a receipt file issued in electronic form. According to various example embodiments, the digital file transmitted together with the issuance request for the NFT may further include a digital file not associated with the receipt. For example, an image file or a video file shot if purchasing a product with regard to the product may also be transmitted together with the issuance request for the NFT to the blockchain network 140. The processor 210 of the electronic device 200 may identify the digital file regarding the receipt related to the purchase of the product and the issuance request for the NFT associated with the receipt.

It is supposed and described that issuing the NFT associated with the receipt is requested using the terminal 120. A user may shoot the receipt related to the purchase of the product using the terminal 120 after purchasing the product and thus obtain the digital file (for example, a photo or a video of the receipt) regarding the receipt. The terminal 120 may transmit the digital file regarding the receipt related to the purchase of the product and the issuance request for the NFT associated with the receipt to the blockchain network 140. The terminal 120 may identify the digital file regarding the receipt related to the purchase of the product and the issuance request for the NFT associated with the receipt through the virtual machine.

Alternatively, it is supposed and described that issuing the NFT associated with the receipt is requested using the server 110 that implements a platform managing the NFT associated with the receipt. The user may shoot the receipt related to the purchase of the product using the terminal 120 after purchasing the product and thus obtain the digital file regarding the receipt. The user may upload (transmit) the digital file regarding the receipt to the platform. The server 110 may obtain the digital file regarding the receipt. The server 110 may transmit the digital file regarding the receipt related to the purchase of the product and the issuance request for the NFT associated with the receipt to the blockchain network 140. The server 110 may identify the digital file regarding the receipt related to the purchase of the product and the issuance request for the NFT associated with the receipt through the virtual machine.

The issuance request for the NFT associated with the receipt may also be performed by a platform managing product evaluation information (for example, review information) or a token development company in addition to the platform managing the NFT. For example, a server that implements the platform managing product evaluation information may also transmit the digital file regarding the receipt related to the purchase of the product and the issuance request for the NFT associated with the receipt to the blockchain network 140. For another example, a server of the token development company may also transmit the digital file regarding the receipt related to the purchase of the product and the issuance request for the NFT associated with the receipt to the blockchain network 140. In other words, as described above, a transmitter of the issuance request for the NFT associated with the receipt may be one of the terminal 120 of the user, the server 110 that implements the platform managing the NFT, the server that implements the platform managing product evaluation information, or the server of the token development company.

The processor 210 of the electronic device 200 according to an example embodiment may issue the NFT associated with the receipt in operation 420. The processor 210 may issue the NFT associated with the receipt in response to the issuance request identified in operation 410. In other words, the smart contract may include an instruction for issuing the NFT associated with the receipt in response to the identified issuance request. An address (for example, URI) where the digital file regarding the receipt is stored in a distributed file system by the processor 210 may be recorded in one or more blocks on the blockchain network 140. By recording the address where the digital file regarding the receipt is stored in the distributed file system in the one or more blocks on the blockchain network 140, the processor 210 may issue the NFT associated with the receipt. Alternatively, the address where the digital file regarding the receipt is stored in the distributed file system by the processor 210 may be recorded in metadata of the NFT associated with the receipt. In other words, the smart contract may include an instruction for storing the digital file regarding the receipt in the distributed file system in response to the identified issuance request. The smart contract may include an instruction for issuing the NFT associated with the receipt as the address where the digital file regarding the receipt is stored in the distributed file system is recorded in the one or more blocks on the blockchain network 140. The processor 210 may identify the metadata of the NFT stored in the blockchain-based distributed file system through an IPFS protocol. The metadata of the NFT may include information generated in a specific format if minting the NFT. The processor 210 of the electronic device 200 may record a wallet address of a first account corresponding to a purchaser of the product in the metadata of the issued NFT associated with the receipt. In other words, the smart contract may include an instruction for recording the wallet address of the first account corresponding to the purchaser of the product in the metadata of the NFT associated with the receipt.

Meanwhile, unlike what is illustrated in FIG. 4, before performing operation 420, the processor 210 of the electronic device 200 may verify (identify) whether the issuance request for the NFT associated with the receipt is transmitted by the purchaser of the product. The smart contract may include an instruction for identifying whether a writer of evaluation information about the product is a holder of the NFT associated with the receipt. In other words, the processor 210 may verify whether a requester that transmits the issuance request for the NFT associated with the receipt is an actual purchaser of the product.

According to an example embodiment for performing the above-described verification, the server 110 may identify whether the requester is the purchaser of the product and provide a result of the identification to the blockchain network 140. The server 110 that operates the platform managing the NFT associated with the receipt may obtain the wallet address of the first account corresponding to the purchaser of the product from the terminal 120 of the purchaser. In other words, the server 110 may obtain the wallet address of the first account, which is an account of the purchaser, from the terminal 120 of the purchaser while obtaining the digital file regarding the receipt. Identification information (for example, a wallet address corresponding to an account of the requester and personal information) of the requester may be obtained if joining the platform and stored in the server 110. Based on the wallet address, the server 110 may verify whether the requester that transmits the issuance request for the NFT is the purchaser of the product. Specifically, by comparing the wallet address of the account corresponding to the requester that transmits the issuance request for the NFT and the wallet address of the first account corresponding to the purchaser, the server 110 may verify whether the requester is the actual purchaser of the product. Alternatively, the server 110 may extract payment information recorded in the receipt from the digital file regarding the receipt and obtain identification information (for example, a wallet address corresponding to an account of a payer and personal information) of the payer from a server of a card company based on the payment information recorded in the receipt. By comparing the identification information of the payer and the identification information of the requester, the server 110 may verify whether the requester is the actual purchaser of the product. If it is verified that the requester is the purchaser of the product through the above-described manner, the server 110 may provide an identifier to the blockchain network 140. The identifier may be, for example, information indicating that the requester that transmits the issuance request for the NFT is the purchaser of the product.

According to another example embodiment for verifying whether the requester that transmits the issuance request for the NFT associated with the receipt is the actual purchaser of the product, whether the requester is the purchaser of the product may be also identified on the blockchain network 140. The server of the card company may record the receipt or the payment information related to the purchase of the product in a block of the blockchain network 140. Through this, the electronic device 200 corresponding to one node included in the blockchain network 140 may, through the virtual machine, identify the receipt or the payment information recorded in the block and obtain identification information of the purchaser corresponding to the receipt or the payment information. By comparing the identification information of the purchaser and the identification information of the requester that transmits the issuance request for the NFT, the electronic device 200 may verify whether the requester is the actual purchaser of the product.

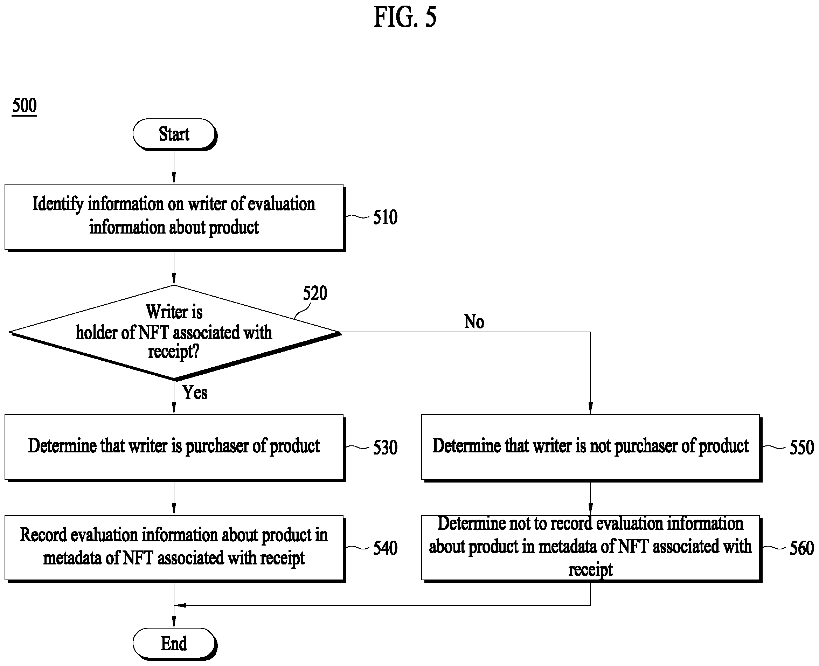

The processor 210 of the electronic device 200 according to an example embodiment may identify the evaluation information about the product in operation 430. Specifically, the smart contract may include an instruction for identifying the evaluation information about the product. The processor 210 of the electronic device 200 according to an example embodiment may, if the writer of the evaluation information about the product is the purchaser that performs the purchase of the product, record the evaluation information about the product in the metadata of the NFT associated with the receipt in operation 440. Specifically, the smart contract may include an instruction for recording the evaluation information about the product in the metadata of the NFT associated with the receipt if the writer of the evaluation information about the product is the purchaser that performs the purchase of the product. The processor 210 may transmit the evaluation information about the product to the blockchain network 140. The processor 210 may identify the evaluation information about the product. The processor 210 may verify (identify) whether the writer of the evaluation information about the product is the purchaser (actual purchaser) that performs the purchase of the product through the virtual machine. A specific verification manner is described below with reference to FIG. 5. The evaluation information about the product may include at least one of a name of the product, identification information about the product, an image of the product, a video of the product, or a review about the product.

It is supposed and described that the writer of the evaluation information about the product is the purchaser that performs the purchase of the product. In other words, it is supposed and described that the actual purchaser of the product writes the evaluation information about the product. In the above case, the purchaser that performs the purchase of the product may write the evaluation information about the product using the terminal 120 and the terminal 120 may transmit the evaluation information about the product to the blockchain network 140. Alternatively, the purchaser that performs the purchase of the product may write the evaluation information about the product using the terminal 120 and transmit the written evaluation information about the product to the platform managing the NFT associated with the receipt. In this case, the server 110 operating the platform may transmit the evaluation information about the product to the blockchain network 140. The processor 210 may identify (verify) whether the writer of the evaluation information about the product is the holder of the NFT associated with the receipt through the virtual machine. If the writer is the holder of the NFT, the processor 210 of the electronic device 200 may record the evaluation information about the product in the metadata of the NFT associated with the receipt. In the above case, since the writer is the holder of the NFT associated with the receipt, the writer is the purchaser that performs the purchase of the product. Therefore, in the above case, the processor 210 may record the evaluation information about the product in the metadata of the NFT associated with the receipt.

According to an example embodiment for identifying whether the writer of the evaluation information about the product is the holder of the NFT associated with the receipt, the server 110 may identify whether the writer is the holder of the NFT associated with the receipt. The server 110 that operates the platform managing the NFT associated with the receipt may receive, from the terminal 120, if the NFT is issued, and store identification information (for example, personal information of the holder and a wallet address of an account corresponding to the holder) of the holder that holds the NFT associated with the receipt. The server 110 may receive identification information (for example, personal information of the writer and a wallet address of an account corresponding to the writer) of the writer of the evaluation information about the product from the terminal 120. By comparing the identification information of the writer and the identification information of the holder, the server 110 may identify whether the writer of the evaluation information about the product is the holder of the NFT associated with the receipt.

According to another example embodiment, it is supposed and described that the writer of the evaluation information about the product is not the purchaser that performs the purchase of the product. In other words, a person other than the actual purchaser of the product may write the evaluation information about the product. In the above case, the person other than the purchaser may write the evaluation information about the product using the terminal 120 and the terminal 120 may transmit the evaluation information about the product to the blockchain network 140. The processor 210 may identify (verify) whether the writer of the evaluation information about the product is the holder of the NFT associated with the receipt through the virtual machine. In the above case, since the writer is not the holder of the NFT associated with the receipt, the writer is not the purchaser that performs the purchase of the product. Therefore, in the above case, the processor 210 may determine not to record the evaluation information about the product in the metadata of the NFT associated with the receipt.

According to the above-described manner, based on the request of the purchaser that performs the purchase of the product, the NFT associated with the receipt related to the purchase of the product may be issued, and the evaluation information about the product written by the purchaser may be recorded in the metadata of the NFT associated with the receipt. If the person other than the purchaser of the product requests issuing the NFT associated with the receipt, the NFT associated with the receipt may not be issued, and the evaluation information about the product written by the person other than the purchaser of the product may not be recorded in the metadata of the NFT associated with the receipt.

FIG. 5 is a flowchart showing a process of recording evaluation information about a product in metadata of an NFT associated with a receipt by the electronic device 200 according to an example embodiment of the present disclosure. Specifically, FIG. 5 is a flowchart regarding a manner of verifying whether a writer of evaluation information about a product is a purchaser that performs a purchase of the product. The operations illustrated in this figure may be operations corresponding to one or more instructions included in a smart contract deployed on the blockchain network 140. In other words, the flowchart illustrated in FIG. 5 is a diagram illustrating the operations corresponding to the one or more instructions included in the smart contract, which are performed as the processor 210 of the electronic device 200 executes the smart contract through a virtual machine (for example, EVM). With regard to FIG. 5, a series of operations performed by the processor 210 of the electronic device 200 may be performed through the virtual machine.

Referring to flowchart 500, the processor 210 of the electronic device 200 according to an example embodiment may identify information on a writer of evaluation information about a product in operation 510. The information on the writer may include, for example, a wallet address of an account and personal information of the writer. The processor 210 may identify the wallet address of the account of the writer or the personal information of the writer transmitted from the server 110 or the terminal 120. In other words, the smart contract may include an instruction for identifying the wallet address of the account of the writer.

The processor 210 of the electronic device 200 according to an example embodiment may identify whether the writer of the evaluation information about the product is a holder of an NFT associated with a receipt in operation 520. The processor 210 may compare the wallet address of the account corresponding to the writer and a wallet address of a first account corresponding to the holder of the NFT recorded in one or more blocks on the blockchain network 140 to each other. Alternatively, the wallet address of the first account corresponding to the holder of the NFT associated with the receipt may also be recorded in metadata of the NFT associated with the receipt. The processor 210 may identify whether the wallet address of the account corresponding to the writer of the evaluation information is identical to the wallet address of the first account corresponding to the holder of the NFT recorded in the one or more blocks on the blockchain network 140. In other words, the smart contract may further include an instruction for identifying whether the writer of the evaluation information about the product is the holder of the NFT associated with the receipt based on the wallet address of the account of the writer and the wallet address of the first account corresponding to the holder of the NFT recorded in the one or more blocks on the blockchain network 140.

According to another example embodiment, the processor 210 may identify whether the writer is the holder of the NFT associated with the receipt using identification information of the writer of the evaluation information about the product. The identification information of the writer of the evaluation information about the product may be transmitted from the server 110 or the terminal 120 to the blockchain network 140. The processor 210 may identify the identification information of the writer of the evaluation information about the product. Identification information of the holder may be recorded in the metadata of the NFT associated with the receipt or the one or more blocks on the blockchain network 140. For example, the identification information (for example, account information corresponding to the holder) of the holder may be recorded in the metadata of the NFT associated with the receipt. In other words, the smart contract may include an instruction for obtaining the identification information of the writer of the evaluation information about the product. By comparing the identification information of the writer and the identification information of the holder of the NFT recorded in the one or more blocks on the blockchain network 140 to each other, the processor 210 may identify whether the writer is the holder of the NFT associated with the receipt. In other words, the smart contract may include an instruction for verifying whether the writer is a purchaser of the product based on the identification information of the writer of the evaluation information about the product.

If the writer of the evaluation information about the product is the holder of the NFT associated with the receipt, proceeding to operation 530 (operation 520 - Yes), the processor 210 may determine that the writer is the purchaser of the product. In other words, the smart contract may include an instruction for determining that the writer is the purchaser of the product if the writer is the holder of the NFT associated with the receipt. According to an example embodiment, the processor 210 of the electronic device 200 may record the evaluation information about the product in the metadata of the NFT associated with the receipt in operation 540. According to an example embodiment, the evaluation information about the product may be stored in a distributed file system, and an address where the evaluation information about the product is stored in the distributed file system may be recorded in the metadata of the NFT associated with the receipt. In other words, the smart contract may include an instruction for storing the evaluation information about the product in the distributed file system in response to the writer being the purchaser of the product. The smart contract may include an instruction for recording the address where the evaluation information about the product is stored in the distributed file system in the metadata of the NFT associated with the receipt. The metadata of the NFT associated with the receipt may include, for example, at least one of detailed information about the product, the evaluation information, the information on the writer of the evaluation information, or information on a date and time of writing. The evaluation information about the product may include, for example, at least one of a name of the product, identification information, an image, a video, or a review regarding the product.

If the writer of the evaluation information about the product is not the holder of the NFT associated with the receipt, proceeding to operation 550 (operation 520 - No), the processor 210 may determine that the writer is not the purchaser of the product. The processor 210 according to an example embodiment may determine not to record the evaluation information about the product in the metadata of the NFT associated with the receipt in operation 560. In other words, the smart contract may include an instruction for not recording the evaluation information about the product in the metadata of the NFT associated with the receipt if the writer of the evaluation information about the product is not the purchaser of the product.

According to the above-described manner, the evaluation information about the product written by a person other than an actual purchaser of the product may not be recorded in the metadata (or a block of the blockchain network 140) of the NFT. In other words, according to the above-described manner, by recording the evaluation information of the product only written by the purchaser of the product in the metadata of the NFT associated with the receipt related to the purchase of the product, transparent and accurate management of the evaluation information may be achieved.

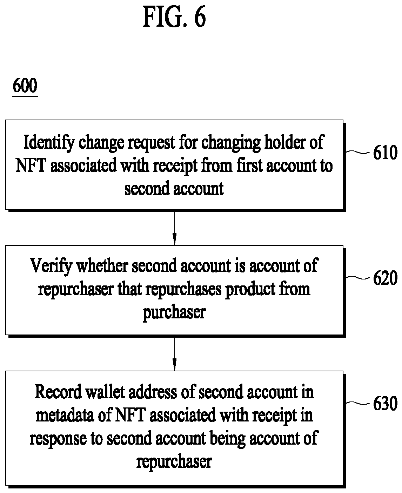

FIG. 6 is a flowchart showing a process of changing a holder of an NFT associated with a receipt by the electronic device 200 according to an example embodiment of the present disclosure. Specifically, FIG. 6 is a flowchart about a manner of changing the holder of the NFT associated with the receipt. The operations illustrated in this figure may be operations corresponding to one or more instructions included in a smart contract deployed on the blockchain network 140. In other words, the flowchart illustrated in FIG. 6 is a diagram illustrating the operations corresponding to the one or more instructions included in the smart contract, which are performed as the processor 210 of the electronic device 200 executes the smart contract through a virtual machine (for example, EVM). With regard to FIG. 6, a series of operations performed by the processor 210 of the electronic device 200 may be performed through the virtual machine.

In a secondhand trade, a purchase agent service, or an electronic commerce service, a product may be repurchased from a purchaser of the product rather than being directly purchased from an authorized seller of the product. For example, after a first customer purchases a product from an authorized seller, the first customer may resell the product to a second customer. For example, after the product is purchased from the authorized seller in a purchase agent platform, the product may be sold to the second customer. In this case, it may be difficult for a repurchaser (for example, the second customer) of the product to identify whether the repurchased product is a genuine product or a counterfeit product.

According to an example embodiment of the present disclosure, by minting a receipt regarding a purchase of a product, an NFT associated with the receipt may be issued, and detailed information about the product or information on a purchaser of the product may be recorded in metadata of the NFT associated with the receipt. Therefore, a repurchaser of the corresponding product may identify whether the corresponding product is a genuine product through the NFT associated with the receipt and may also receive (or may purchase) the NFT associated with the receipt together with the product.

According to an example embodiment of the present disclosure, a digital file not associated with a receipt may be stored in a distributed file system in addition to a digital file associated with the receipt. For example, with regard to a product, an image file or a video file shot if purchasing the product may also be stored in the distributed file system, and an address where the image file or the video file is stored in the distributed file system may be recorded in one or more blocks on the blockchain network 140. The image file or the video file may also include information on a purchaser (for example, the first customer) of the product. In this case, a repurchaser (for example, the second customer) of the corresponding product may identify the purchaser (for example, the first customer) of the corresponding product through an NFT associated with the receipt. In an example embodiment, if the first customer is a celebrity such as singers and actors, it may be proved through the NFT that the corresponding product is previously used by the celebrity and a value of the corresponding product may be more highly regarded.

Referring to flowchart 600, the processor 210 of the electronic device 200 according to an example embodiment may identify a change request for changing a holder of an NFT associated with a receipt from a first account to a second account in operation 610. For example, the first account may be an account corresponding to a purchaser (hereinafter referred to as an initial purchaser) that makes an initial purchase of a product, and the second account may be an account of a repurchaser that repurchases the product from the initial purchaser. For example, the server 110 that operates a platform managing the NFT associated with the receipt may, if the product is sold by the initial purchaser to the repurchaser, transmit the change request for changing the holder of the NFT associated with the receipt from the first account corresponding to the initial purchaser to the second account corresponding to the repurchaser to the blockchain network 140. In other words, the smart contract may include an instruction for identifying the change request for changing the holder of the NFT associated with the receipt from the first account to the second account.

The processor 210 of the electronic device 200 according to an example embodiment may verify whether the second account is the account of the repurchaser that repurchases the product from the purchaser in operation 620. The server 110 that operates the platform may transmit identification information of the repurchaser that repurchases the product to the blockchain network 140. The identification information of the repurchaser may include, for example, a wallet address of the second account corresponding to the repurchaser. In other words, the smart contract may include an instruction for verifying whether the second account is the account of the repurchaser that repurchases the product from the purchaser.

The processor 210 of the electronic device 200 according to an example embodiment may record the wallet address of the second account in metadata of the NFT associated with the receipt in response to the second account being the account of the repurchaser in operation 630. The processor 210 may change the holder of the NFT associated with the receipt from the first account to the second account and record the wallet address of the second account in the metadata of the NFT associated with the receipt. In other words, the smart contract may include an instruction for recording the wallet address of the second account in the metadata of the NFT associated with the receipt in response to the second account being the account of the repurchaser.

Through the above-described manner, since who the product is sold by and to may be identified through the NFT associated with the receipt, information about the product may be managed in a transparent and fair manner.

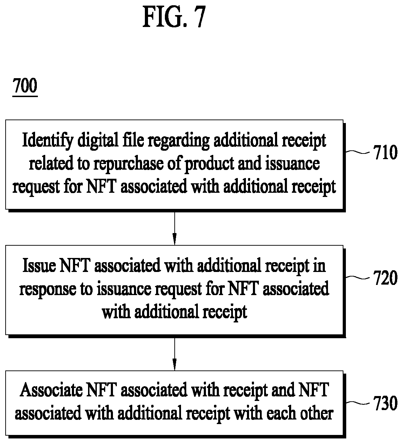

FIG. 7 is a flowchart showing a process of associating an NFT associated with a receipt and an NFT associated with an additional receipt with each other by the electronic device 200 according to an example embodiment of the present disclosure. Specifically, FIG. 7 is a flowchart about a manner of issuing an NFT associated with an additional receipt related to a repurchase of a product and may be a flowchart about operations additionally performed after performing the flowchart illustrated in FIG. 6.

The operations illustrated in this figure may be operations corresponding to one or more instructions included in a smart contract deployed on the blockchain network 140. In other words, the flowchart illustrated in FIG. 7 is a diagram illustrating the operations corresponding to the one or more instructions included in the smart contract, which are performed as the processor 210 of the electronic device 200 executes the smart contract through a virtual machine (for example, EVM). With regard to FIG. 7, a series of operations performed by the processor 210 of the electronic device 200 may be performed through the virtual machine.

Referring to flowchart 700, the processor 210 of the electronic device 200 according to an example embodiment may identify a digital file regarding an additional receipt related to a repurchase of a product and an issuance request for an NFT associated with the additional receipt in operation 710. If the product is sold by an initial purchaser to a repurchaser, the repurchaser may receive the additional receipt related to the repurchase of the product. For example, if the initial purchaser of the product is a purchase agent platform, the additional receipt may be issued to the repurchaser of the product. The processor 210 may transmit the digital file regarding the additional receipt related to the repurchase of the product to the blockchain network 140 and transmit the issuance request for the NFT associated with the additional receipt together. The digital file regarding the receipt related to the repurchase of the product may be, for example, a receipt photo obtained by shooting a receipt issued if repurchasing a product and may also be a receipt file issued in electronic form. The processor 210 may identify the digital file regarding the additional receipt related to the repurchase of the product and the issuance request for the NFT associated with the additional receipt. In other words, the smart contract may include an instruction for identifying the digital file regarding the additional receipt related to the repurchase of the product and the issuance request for the NFT associated with the additional receipt.

The processor 210 of the electronic device 200 according to an example embodiment may issue the NFT associated with the additional receipt in response to the issuance request for the NFT associated with the additional receipt in operation 720. The processor 210 may issue the NFT associated with the additional receipt in response to the issuance request identified in operation 710. An address (for example, URI) where the digital file regarding the additional receipt is stored in a distributed file system by the processor 210 may be recorded in one or more blocks on the blockchain network 140. In other words, by recording the address where the digital file regarding the additional receipt is stored in the distributed file system in the one or more blocks on the blockchain network 140, the processor 210 may issue the NFT associated with the additional receipt. Alternatively, the address where the digital file regarding the additional receipt is stored in the distributed file system by the processor 210 may be recorded in metadata of the NFT associated with the additional receipt. In other words, the smart contract may include an instruction for issuing the NFT associated with the additional receipt in response to the issuance request for the NFT associated with the additional receipt.

The processor 210 of the electronic device 200 according to an example embodiment may associate an NFT associated with a receipt and the NFT associated with the additional receipt with each other in operation 730. The processor 210 may associate the NFT associated with the receipt and the NFT associated with the additional receipt with each other in order to verify that the NFT associated with the receipt and the NFT associated with the additional receipt are NFTs regarding an identical product. In other words, the smart contract may include an instruction for associating the NFT associated with the receipt and the NFT associated with the additional receipt with each other. For example, the processor 210 may record information on the NFT associated with the receipt in the metadata of the NFT associated with the additional receipt. For example, the processor 210 may record information on the NFT associated with the additional receipt in metadata of the NFT associated with the receipt. In other words, the smart contract may include an instruction for recording the information on the NFT associated with the receipt in the metadata of the NFT associated with the additional receipt.

According to an example embodiment, the processor 210 may also combine the NFT associated with the receipt and the NFT associated with the additional receipt. For example, the processor 210 may create a new third NFT by combining the NFT associated with the receipt and the NFT associated with the additional receipt. In the above case, the NFT associated with the receipt and the NFT associated with the additional receipt may be set not to be traded anymore and the combined third NFT may be traded only. The information on the NFT associated with the receipt and the information on the NFT associated with the additional receipt may also be recorded in metadata of the third NFT. In the above case, the NFT associated with the receipt and the NFT associated with the additional receipt may be deleted and the combined third NFT may be present only. In other words, the smart contract may include an instruction for combining the NFT associated with the receipt and the NFT associated with the additional receipt.

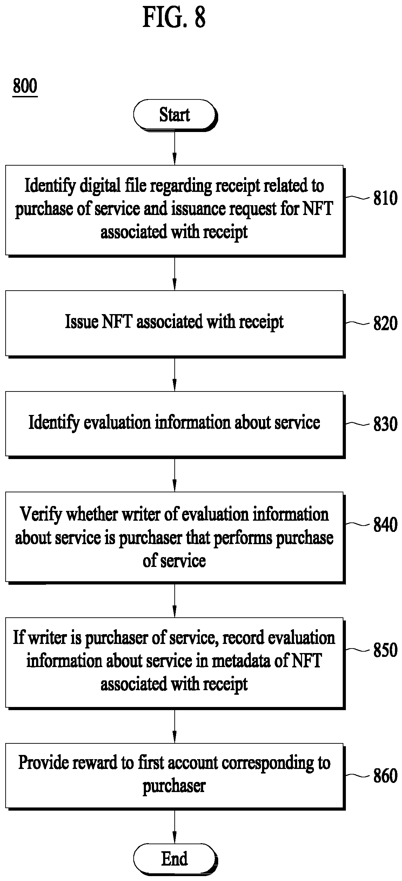

FIG. 8 is a flowchart showing a process of processing an NFT associated with a receipt related to a purchase of a service by the electronic device 200 according to an example embodiment of the present disclosure. Specifically, FIG. 8 is a flowchart about a manner of issuing the NFT associated with the receipt using a digital file regarding the receipt related to the purchase of the service and recording evaluation information about the service in metadata of the NFT. The operations illustrated in this figure may be operations corresponding to one or more instructions included in a smart contract deployed on the blockchain network 140. In other words, the flowchart illustrated in FIG. 8 is a diagram illustrating the operations corresponding to the one or more instructions included in the smart contract, which are performed as the processor 210 of the electronic device 200 executes the smart contract through a virtual machine (for example, EVM). With regard to FIG. 8, a series of operations performed by the processor 210 of the electronic device 200 may be performed through the virtual machine. Duplicate description of content described above with reference to FIGS. 4 and 5 will be omitted without further description. A service described herein may be a concept encompassing services provided in various fields such as the food industry, the hospitality industry, the transportation industry, and the tourism industry.

Referring to flowchart 800, the processor 210 of the electronic device 200 according to an example embodiment may identify a digital file regarding a receipt related to a purchase of a service and an issuance request for an NFT associated with the receipt in operation 810. The processor 210 may transmit the digital file regarding the receipt related to the purchase of the service to the blockchain network 140 and transmit the issuance request for the NFT associated with the receipt together. For example, by shooting a receipt issued if visiting a restaurant and purchasing a food service using the terminal 120, a customer may obtain the digital file regarding the receipt related to the purchase of the service. The terminal 120 may transmit the digital file regarding the receipt related to the purchase of the service and the issuance request for the NFT associated with the receipt to the blockchain network 140. The terminal 120 may identify the digital file regarding the receipt related to the purchase of the service and the issuance request for the NFT associated with the receipt through the virtual machine. In other words, the smart contract may include an instruction for identifying the digital file regarding the receipt related to the purchase of the service and the issuance request for the NFT associated with the receipt.

The processor 210 of the electronic device 200 according to an example embodiment may issue the NFT associated with the receipt in operation 820. In other words, the smart contract may include an instruction for issuing the NFT associated with the receipt in response to the identified issuance request. An address (for example, URI) where the digital file regarding the receipt is stored in a distributed file system by the processor 210 may be recorded in one or more blocks on the blockchain network 140. In other words, by recording the address where the digital file regarding the receipt is stored in the distributed file system in the one or more blocks on the blockchain network 140, the processor 210 may issue the NFT associated with the receipt. Alternatively, the address where the digital file regarding the receipt is stored in the distributed file system by the processor 210 may be recorded in metadata of the NFT associated with the receipt. The processor may record a wallet address of a first account corresponding to a purchaser of the service in the metadata of the NFT associated with the receipt.

The processor 210 of the electronic device 200 according to an example embodiment may identify evaluation information about the service in operation 830. The evaluation information about the service may include, for example, at least one of a name of a store providing the service, a charge, an image, a video, or a review regarding the service. In other words, the smart contract may include an instruction for identifying the evaluation information about the service.

The processor 210 of the electronic device 200 according to an example embodiment may verify whether a writer of the evaluation information about the service is the purchaser that performs the purchase of the service in operation 840. For example, the processor 210 may compare a wallet address of an account corresponding to the writer of the evaluation information and the wallet address of the first account corresponding to a holder of the NFT recorded in the one or more blocks on the blockchain network 140 to each other. Alternatively, the wallet address of the first account corresponding to the holder of the NFT associated with the receipt may also be recorded in the metadata of the NFT associated with the receipt. The processor 210 may identify whether the wallet address of the account corresponding to the writer of the evaluation information is identical to the wallet address of the first account corresponding to the holder of the NFT recorded in the one or more blocks on the blockchain network 140. In other words, the smart contract may include an instruction for verifying whether the writer of the evaluation information about the service is the purchaser of the service by verifying whether the writer of the evaluation information about the service is the holder of the NFT associated with the receipt.

The processor 210 of the electronic device 200 according to an example embodiment may, if the writer is the purchaser of the service, record the evaluation information about the service in the metadata of the NFT associated with the receipt in operation 850. The metadata of the NFT associated with the receipt may include, for example, at least one of detailed information about the service, the evaluation information, information on the writer of the evaluation information, or information on a date and time of writing. In other words, the smart contract may include an instruction for recording the evaluation information about the service in the metadata of the NFT associated with the receipt if the writer is the purchaser of the service.

The processor 210 of the electronic device 200 according to an example embodiment may provide a reward to the first account corresponding to the purchaser in operation 860. The processor 210 may provide the reward to the first account corresponding to the purchaser in response to recording the evaluation information about the service in the metadata of the NFT. For example, the processor 210 may provide a virtual currency as the reward to the wallet address of the first account corresponding to the purchaser. For example, the processor 210 may provide a point that may be used in a platform managing the NFT associated with the receipt as the reward to the first account corresponding to the purchaser. In other words, the smart contract may include an instruction for providing the reward to the first account in response to recording the evaluation information about the service.

According to the above-described manner, if the purchaser of the service records the evaluation information about the service, writing the evaluation information may be induced by providing the reward to the purchaser in response thereto.

According to an example embodiment of the present disclosure, a smart contract to process an NFT associated with a receipt may be deployed on the blockchain network 140. The smart contract may include one or more instructions. Specifically, the smart contract may include an instruction for identifying a digital file regarding a receipt related to a purchase of a product and an issuance request for an NFT associated with the receipt. The smart contract may include an instruction for issuing the NFT associated with the receipt in response to the identified issuance request. The smart contract may include an instruction for identifying evaluation information about the product. The smart contract may include an instruction for recording the evaluation information about the product in metadata of the NFT associated with the receipt if a writer of the evaluation information about the product is a purchaser that performs the purchase of the product. The smart contract may include an instruction for storing the digital file regarding the receipt in a distributed file system in response to the identified issuance request. The smart contract may include an instruction for issuing the NFT associated with the receipt as an address where the digital file regarding the receipt is stored in the distributed file system is recorded in one or more blocks on the blockchain network 140.

The smart contract may include an instruction for recording a wallet address of a first account corresponding to the purchaser of the product in the metadata of the NFT associated with the receipt. The smart contract may include an instruction for identifying whether the writer of the evaluation information about the product is a holder of the NFT associated with the receipt. The smart contract may include an instruction for determining that the writer is the purchaser of the product if the writer is the holder of the NFT associated with the receipt. The smart contract may include an instruction for identifying a wallet address of an account of the writer. The smart contract may further include an instruction for identifying whether the writer of the evaluation information about the product is the holder of the NFT associated with the receipt based on the wallet address of the account of the writer and the wallet address of the first account corresponding to the holder of the NFT recorded in the one or more blocks on the blockchain network 140. The smart contract may include an instruction for storing the evaluation information about the product in the distributed file system in response to the writer being the purchaser of the product. The smart contract may include an instruction for recording the address where the evaluation information about the product is stored in the distributed file system in the metadata of the NFT associated with the receipt.

The smart contract may include an instruction for not recording the evaluation information about the product in the metadata of the NFT associated with the receipt if the writer of the evaluation information about the product is not the purchaser of the product. The smart contract may include an instruction for obtaining identification information of the writer of the evaluation information about the product. The smart contract may include an instruction for verifying whether the writer is the purchaser of the product based on the identification information of the writer of the evaluation information about the product. The smart contract may include an instruction for identifying a change request for changing the holder of the NFT associated with the receipt from the first account to a second account. The smart contract may include an instruction for verifying whether the second account is an account of a repurchaser that repurchases the product from the purchaser. The smart contract may include an instruction for recording a wallet address of the second account in the metadata of the NFT associated with the receipt in response to the second account being the account of the repurchaser. The smart contract may include an instruction for identifying a digital file regarding an additional receipt related to the repurchase of the product and an issuance request for an NFT associated with the additional receipt. The smart contract may include an instruction for issuing the NFT associated with the additional receipt in response to the issuance request for the NFT associated with the additional receipt. The smart contract may include an instruction for associating the NFT associated with the receipt and the NFT associated with the additional receipt with each other. The smart contract may include an instruction for recording information on the NFT associated with the receipt in metadata of the NFT associated with the additional receipt. The smart contract may include an instruction for combining the NFT associated with the receipt and the NFT associated with the additional receipt.

The smart contract may include an instruction for identifying a digital file regarding a receipt related to a purchase of a service and an issuance request for an NFT associated with the receipt. The smart contract may include an instruction for issuing the NFT associated with the receipt in response to the identified issuance request. The smart contract may include an instruction for identifying evaluation information about the service. The smart contract may include an instruction for verifying whether a writer of the evaluation information about the service is a purchaser of the service by verifying whether the writer of the evaluation information about the service is a holder of the NFT associated with the receipt. The smart contract may include an instruction for recording the evaluation information about the service in metadata of the NFT associated with the receipt if the writer is the purchaser of the service. The smart contract may include an instruction for providing a reward to a first account in response to recording the evaluation information about the service.

The electronic device according to the above-described example embodiments may include a processor, a memory for storing and executing program data, a permanent storage such as a disk drive, a communication port that communicates with an external device, and a user interface device such as a touch panel, a key, and a button. Methods implemented by software modules or algorithms may be stored in a computer-readable recording medium as computer-readable codes or program instructions executable on the processor. Here, the computer-readable recording medium includes a magnetic storage medium (for example, readonly memory (ROM), random-access memory (RAM), floppy disks, and hard disks) and an optically readable medium (for example, CD-ROM and digital versatile discs (DVDs)). The computer-readable recording medium may be distributed among network-connected computer systems, so that the computer-readable codes may be stored and executed in a distributed manner. The medium may be readable by a computer, stored in a memory, and executed on a processor.

The example embodiments may be represented by functional block elements and various processing steps. The functional blocks may be implemented in any number of hardware and/or software configurations that perform specific functions. For example, an example embodiment may adopt integrated circuit configurations, such as memory, processing, logic, and/or look-up table, that may execute various functions by the control of one or more microprocessors or other control devices. Similarly to that elements may be implemented as software programming or software elements, the example embodiments may be implemented in a programming or scripting language such as C, C++, Java, assembler, etc., including various algorithms implemented as a combination of data structures, processes, routines, or other programming constructs. Functional aspects may be implemented in an algorithm running on one or more processors. Further, the example embodiments may adopt the existing art for electronic environment setting, signal processing, and/or data processing. Terms such as "mechanism," "element," "means," and "configuration" may be used broadly and are not limited to mechanical and physical configurations. The terms may include the meaning of a series of routines of software in association with a processor or the like.

The above-described example embodiments are merely examples, and other example embodiments may be implemented within the scope of the claims to be described later.

Aspects of the embodiments can be modified, if necessary to employ concepts of the various patents, applications and publications to provide yet further embodiments.

These and other changes can be made to the embodiments in light of the above-detailed description. In general, in the following claims, the terms used should not be construed to limit the claims to the specific embodiments disclosed in the specification and the claims, but should be construed to include all possible embodiments along with the full scope of equivalents to which such claims are entitled. Accordingly, the claims are not limited by the disclosure.

## Claims

1. A method of processing a non-fungible token (NFT) by an electronic device, the method comprising:
executing a smart contract to process an NFT associated with a receipt by a processor of the electronic device connected to a computer network including a blockchain network,
wherein the smart contract comprises one or more instructions, and
wherein the one or more instructions are configured to, when executed, cause the processor to:
identify a digital file regarding a receipt related to a purchase of a product and an issuance request for an NFT associated with the receipt;
issue, in response to the identified issuance request, the NFT associated with the receipt;
identify evaluation information about the product; and
based on a writer of the evaluation information about the product being a purchaser that performs the purchase of the product, record the evaluation information about the product in metadata of the NFT associated with the receipt.

2. The method of claim 1, wherein the one or more instructions are further configured to, when executed, cause the processor to:
store, in response to the identified issuance request, the digital file regarding the receipt in a distributed file system; and
issue the NFT associated with the receipt by recording an address where the digital file regarding the receipt is stored in the distributed file system in one or more blocks on the blockchain network.

3. The method of claim 1, wherein the one or more instructions are further configured to, when executed, cause the processor to record a wallet address of a first account corresponding to the purchaser of the product in the metadata of the NFT associated with the receipt.

4. The method of claim 3, wherein the one or more instructions are further configured to, when executed, cause the processor to:
identify whether the writer of the evaluation information about the product is a holder of the NFT associated with the receipt; and
based on the writer being the holder of the NFT associated with the receipt, determine that the writer is the purchaser of the product.

5. The method of claim 4, wherein the one or more instructions are further configured to, when executed, cause the processor to:
identify a wallet address of an account of the writer; and
based on the wallet address of the account of the writer and the wallet address of the first account corresponding to the holder of the NFT recorded in one or more blocks on the blockchain network, identify whether the writer is the holder of the NFT associated with the receipt.

6. The method of claim 4, wherein the one or more instructions are further configured to, when executed, cause the processor to:
in response to the writer being the purchaser of the product, store the evaluation information about the product in a distributed file system; and
record an address where the evaluation information about the product is stored in the distributed file system in the metadata of the NFT associated with the receipt.

7. The method of claim 1, wherein the one or more instructions are further configured to, when executed, cause the processor, not to record the evaluation information about the product in the metadata of the NFT associated with the receipt, based on the writer not being the purchaser of the product.

8. The method of claim 3, wherein the one or more instructions are further configured to, when executed, cause the processor to:
obtain identification information about the writer; and
based on the identification information about the writer, verify whether the writer is the purchaser of the product.

9. The method of claim 3, wherein the one or more instructions are further configured to, when executed, cause the processor to:
identify a change request for changing a holder of the NFT associated with the receipt from the first account to a second account;
verify whether the second account is an account of a repurchaser that repurchases the product from the purchaser; and
in response to the second account being the account of the repurchaser, record a wallet address of the second account in the metadata of the NFT associated with the receipt.

10. The method of claim 9, wherein the one or more instructions are further configured to, when executed, cause the processor to:
identify a digital file regarding an additional receipt related to a repurchase of the product and an issuance request for an NFT associated with the additional receipt;
in response to the issuance request for the NFT associated with the additional receipt, issue the NFT associated with the additional receipt; and
associate the NFT associated with the receipt and the NFT associated with the additional receipt with each other.

11. The method of claim 10, wherein the one or more instructions are further configured to, when executed, cause the processor to record information about the NFT associated with the receipt in metadata of the NFT associated with the additional receipt.

12. The method of claim 10, wherein the one or more instructions are further configured to, when executed, cause the processor to combine the NFT associated with the receipt and the NFT associated with the additional receipt.

13. The method of claim 1, wherein the metadata of the NFT associated with the receipt include at least one of detailed information about the product, the evaluation information, information on the writer of the evaluation information, or information on a date and time of writing.

14. The method of claim 1, wherein the evaluation information includes at least one of a name of the product, identification information, an image, a video, or a review regarding the product.

15. An electronic device comprising:
a communication circuit configured to perform communication with a computer network including a blockchain network;
a memory in which a smart contract to process an NFT associated with a receipt is stored; and
a processor,
wherein the processor is configured to execute the smart contract including one or more instructions, and
wherein the processor is configured, by executing the one or more instructions, to:
identify a digital file regarding a receipt related to a purchase of a product and an issuance request for an NFT associated with the receipt;
issue, in response to the identified issuance request, the NFT associated with the receipt;
identify evaluation information about the product; and
based on a writer of the evaluation information about the product being a purchaser that performs the purchase of the product, record the evaluation information about the product in metadata of the NFT associated with the receipt.
